Europäisches Patentamt

European Patent Office

Office européen des brevets

(19)

(11) Publication number: 0 491 411 A1

## (12) EUROPEAN PATENT APPLICATION

(21) Application number: 91203130.9

(22) Date of filing: 28.11.91

(51) Int. Cl.5: **A22C 7/00, A47J 43/18**

(30) Priority: **19.12.90 NL 9002817**

(43) Date of publication of application:
**24.06.92 Bulletin 92/26**

(84) Designated Contracting States:
**AT BE CH DE DK ES FR GB GR IT LI NL SE**

(71) Applicant: **UNILEVER NV**
**Burgemeester s'Jacobplein 1 P.O. Box 760**
**NL-3000 DK Rotterdam(NL)**

(84) **BE CH DE DK ES FR GR IT LI NL SE AT**

(71) Applicant: **UNILEVER PLC**
**Unilever House Blackfriars P.O. Box 68**
**London EC4P 4BO(GB)**

(84) **GB**

(72) Inventor: **Boeijen, Leonardus Franciscus**
**Arnoldus**
**Beukenstraat 10**
**NL-5342 XA Oss(NL)**
Inventor: **Smits, Johannes Willem**
**Kromstraat 47**
**NL-5345 AA Oss(NL)**

(74) Representative: **Roscoe, Brian Corrie et al**
**UNILEVER PLC Patents Division P.O. Box 68**
**Unilever House**
**London EC4P 4BO(GB)**

(54) Method and cooking mould for cooking an extruded, packed sausage product.

(57) Method for cooking an extruded package sausage product as well as a cooking mould. The sausage product is placed in the cooking mould (1) according to the invention, heated together with the mould and removed after cooking from the mould as a sausage product. According to the invention the diameter of the sausage product when placed in the cooking mould is at least 5% smaller than the internal diameter of the cooking mould. To provide elastic yielding of the cooking mould preferably it is provided with a longitudinal slit (3) at least along a part of its length.

The invention relates to a method for cooking an extruded, packed sausage product, comprising placing the sausage product in a cooking mould, heating the cooking mould, and removing the sausage product from the cooking mould.

Such a method is generally known in the state of the art and is described both in German Offenlegungsschrift 2,601,354 and in German Auslegeschrift 1,250,758.

The first-mentioned publication describes a square cooking mould which is provided at both ends with a cover. The purpose of said cooking mould is a packed sausage product, for example a sausage product surrounded by intestinal material, to be placed therein after extrusion and the sausage product then cooked. The packed, extruded sausage product fits exactly into the cooking mould and expands considerably during the cooking. The expansion forces are absorbed by the end covers, one of the end covers being made resilient. After cooking and cooling, considerable forces are required to remove the sausage from the cooking mould. Since the extruded sausage product is placed in a tight fit in the cooking mould, it is not possible to make longer sausage products in this way, because placing them in the mould gives rise to problems. A solution to this problem was found by moving the filling horn in the cooking mould, so that the sausage product is extruded on the spot in the cooking mould. In order to facilitate this extrusion, it is proposed according to German Auslegeschrift 1,250,758 to make the cooking mould of two half shells. The disadvantage here too is that both before and after cooking a number of actions are necessary relating to opening and closing of covers, and that considerable force is needed to remove the cooked sausage product from the cooking mould.

The object of the invention is to avoid these disadvantages.

This object is achieved in the case of the method described above in that the diameter of the sausage product when placed in the cooking mould is at least 5%, and preferably at least 10%, smaller than the internal diameter of the cooking mould.

It has surprisingly been found that when these measurement differences are selected, the sausage product on the one hand lies less tightly against the cooking mould after cooking, so that removal therefrom is easier and, on the other, it is adequately ensured that no undesirable deformation occurs during expansion of the sausage product during cooking.

According to an advantageous embodiment of the invention, the sausage product is first extruded and packed, and is then placed in the cooking mould.

Since there is a difference in diameter between the cooking mould and the sausage product, it is now possible also to make sausage products of longer length. Limitations imposed by the combination of filling horn and cooking mould, as in the state of the art, do not exist any more.

In order to eliminate adhesion of the sausage product to the cooking mould after cooking, according to a further advantageous embodiment of the method, compressed air is used between the sausage product and the inside of the cooking mould.

This considerably simplified method now makes it possible to use an entirely different cooking mould. This cooking mould according to the invention comprises an elongated container corresponding to the final shape of the sausage product, and being provided with a longitudinal slit at least along a part of its length. According to a preferred embodiment, the cooking moulds can be essentially open on both sides. The boundary of the longitudinal slit is preferably elastically yielding. This particularly simple cooking mould was found to be satisfactory and, when the above-described differences between sausage product and internal diameter of the cooking mould were applied, no oval shape or other undesirable deformation of the sausage product was found to occur during the cooking. The presence of the longitudinal slit ensures that the sausage product is particularly simple to place in and remove from the mould. It is no longer necessary to open covers, while the lower pressure force means that less effort is required to remove the cooked sausage product from the cooking mould.

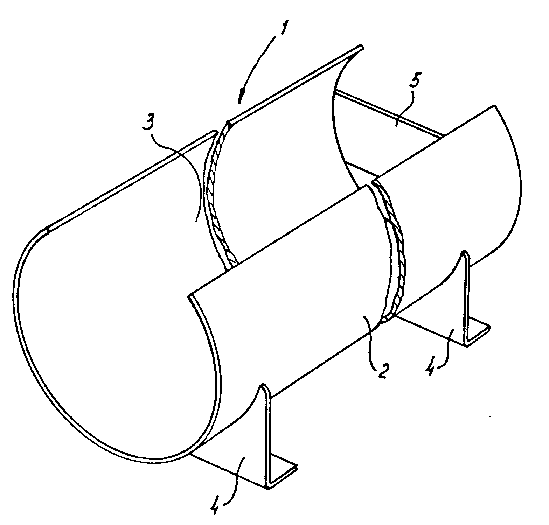

The invention will be explained in greater detail below with reference to an example of an embodiment shown in the drawings. The sole figure here shows the cooking mould in a perspective side view.

The cooking mould according to the invention is shown in its entirety by 1. It comprises a tubular part 2 provided with a longitudinal slit 3. Said longitudinal slit extends over the entire length of the cooking mould. The tubular part 2 is supported laterally by transverse reinforcements 4, which are provided at regular intervals. Transverse bracing 5 is present at one side to provide support. It does not completely shut off the end opening in question.

Example of embodiment:

The device described above had an internal diameter of 112 mm and a length of 25 cm. An extruded, packed sausage product was placed in it for cooking. This sausage product had an external diameter of 100 mm when placed in the mould.

After cooking, the sausage product was found to have an external diameter of 112 mm and to be a true circular shape. Despite the relatively high weight of 2 kg and the increased diameter, the sausage product was easy to remove from the cooking mould after cooking. Despite the absence of end covers, only a few millimetres from the ends were not truly circular. It was found that the sausage product expanded uniformly during the cooking, i.e. that displacements of material were to the same extent in all directions.

Although the invention is described above with reference to a (partially) round cooking mould, it must be understood that it can be of all other shapes for cooking moulds known in the state of the art, such as rectangular, square etc.

**Claims**

1. Method for cooking an extruded, packed sausage product, comprising placing the sausage product in a cooking mould, heating the cooking mould, and removing the sausage product from the cooking mould, characterised in that the diameter of the sausage product when placed in the cooking mould is at least 5% smaller than the internal diameter of the cooking mould.

2. Method according to Claim 1, in which the diameter of the sausage product is at least 10% smaller than the internal diameter of the cooking mould.

3. Method according to any of the preceding claims, in which the sausage product is first extruded and packed, and is then placed in the cooking mould.

4. Method according to any of the preceding claims, in which for the removal of the sausage product from the cooking mould compressed air is used between the sausage product and the inside of the cooking mould.

5. Cooking mould, comprising an elongated container corresponding to the final shape of the sausage product, characterised in that the container is provided with a longitudinal slit at least along a part of its length.

6. Cooking mould according to Claim 5, in which the longitudinal slit extends over the entire length of the container.

7. Cooking mould according to any of Claims 5 or 6, in which the cooking mould is provided with transverse reinforcements near the longitudinal slit.

8. Cooking mould according to any of Claims 5 - 7, in which the boundary of the longitudinal slit is elastically yielding.

9. Cooking mould according to any of Claims 5 - 8, in which the cooking mould is essentially open at both ends.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-3 604 339 (BECK)<br>* the whole document *<br>--- | 1 | A22C7/00<br>A47J43/18 |
| A | DE-A-3 118 814 (KOLLMER)<br>* page 7, line 26 - page 8, line 10 *<br>--- | 1,5,6 | |
| A | US-A-3 290 721 (SIEGAL)<br>* column 3, line 27 - line 31 *<br>* column 4, line 62 - line 70 *<br>* column 5, line 47 - column 6, line 52 *<br>--- | 1,5,6 | |
| A | FR-A-739 338 (DOUEZ)<br>--- | | |
| A | US-A-4 183 964 (VINOKUR)<br>--- | | |
| A | DE-C-202 445 (GARM)<br>--- | | |
| A | US-A-3 853 999 (KENTOR)<br>--- | | |
| A | DE-A-2 156 257 (DUENKEL)<br>--- | | TECHNICAL FIELDS SEARCHED (Int. Cl.5 ) |
| D,A | DE-B-1 250 758 (SOMMER)<br>--- | | |
| D,A | DE-A-2 601 354 (KOTTMAN)<br>----- | | A22C<br>A47J |

The present search report has been drawn up for all claims

| Place of search | Date of completion of the search | Examiner |
|---|---|---|
| THE HAGUE | 03 MARCH 1992 | DE LAMEILLIEURE D. |

EPO FORM 1503 03.82 (P0401)